# EUROPEAN PATENT APPLICATION

(11) **EP 1 717 687 A2**
(43) Date of publication of application: **02.11.2006**
(21) Application number: 06008596.6
(22) Date of filing: 26.04.2006
(51) Int. Cl.: G06F 3/048, G06Q 10/00

(54) **Display system and fixed time remind method therefor**

(30) Priority: 28.04.2005 CN 200510070103
(71) Applicant: ASUSTeK Computer Inc., Peitou, Taipei City (TW)
(72) Inventor: Chung, Show-Nan, Peitou, Taipei (TW); Lin, Wan-Shan, Peitou, Taipei (TW); Ho, Yu-Wen, Peitou, Tapei (TW)
(74) Representative: Reinhard - Skuhra - Weise & Partner

(57) **Abstract**

A display system and a fixed time remind method therefor. The display system has a displaying device. The fixed time remind method includes the following steps. As an operation window is opened, the operation window displays a remind message on the displaying device. As the remind message is enabled and after a remind time is set, the remind time is saved. As the remind time is up, the displaying device outputs a remind signal for the remind message.

## Description

This application claims the benefit of People's Republic of China application Serial No. 200510070103.6, filed April 28, 2005, the subject matter of which is incorporated herein by reference.

### BACKGROUND OF THE INVENTION

### Field of the Invention

The invention relates in general to a fixed time remind method for a display system, and more particularly to a fixed time remind method and a fixed time remind apparatus of a television.

### Description of the Related Art

With the progressing of the technology, electric devices, such as mobile phones, televisions, personal digital assistants and the like, have been widely used in the human's daily life. These electric devices have enriched and facilitated the human's life. In the busy life, however, the human tends to forget the other issues due to the attention to some issue. For example, a user may forget the food being cooked or the schedule of the trash car because he or she pays too much attention to the program on the television. Thus, the food may be caramelized and the trash may be putrid, which are troublesome in the daily life.

Some users may use memos or timer to remind themselves of the specific works to be finished at specific time instants in order to avoid the above-mentioned trouble. However, the memo may be arbitrarily placed and may be easily lost, and the good remind effect cannot be effectively achieved. The timer only can remind the user that the predetermined time is up, and cannot remind the user of the predetermined event to be finished. Thus, the help of the timer to the user is limited.

### SUMMARY OF THE INVENTION

It is therefore an object of the invention to provide a fixed time remind method for a display system capable of reminding the user of the to-be-done works or to-be-finished events at predetermined time instants, and thus enhancing the convenience of the user's daily life.

The invention achieves the above-identified object by providing a fixed time remind method for a display system. The display system has a displaying device. The fixed time remind method includes the steps of: operating an operation window; at least setting a remind message and a remind time corresponding to the remind message; saving the remind time; and producing the remind message when the remind time is up.

The invention also achieves the above-identified object by providing a display system including a remote controller and a displaying device. The remote controller provides a selection signal. The displaying device displays a remind message according to the selection signal when an operation window is opened. When the remind message is enabled and after a remind time corresponding to the remind message is set, the displaying device saves the remind time. When the remind time is up, the displaying device outputs a remind image corresponding to the remind message.

Other objects, features, and advantages of the invention will become apparent from the following detailed description of the preferred but non-limiting embodiment. The following description is made with reference to the accompanying drawings.

### BRIEF DESCRIPTION OF THE DRAWINGS

FIG. 1 is a schematic illustration showing an example of a display system according to a preferred embodiment of the invention.

FIG. 2 is a flow chart showing a fixed time remind method according to the preferred embodiment of the invention.

### DETAILED DESCRIPTION OF THE INVENTION

The embodiment provides a fixed time remind method for a display system capable of producing a remind message, after a remind time is up, to remind the user of the to-be-reminded event, and thus enhancing the convenience of the user's daily life.

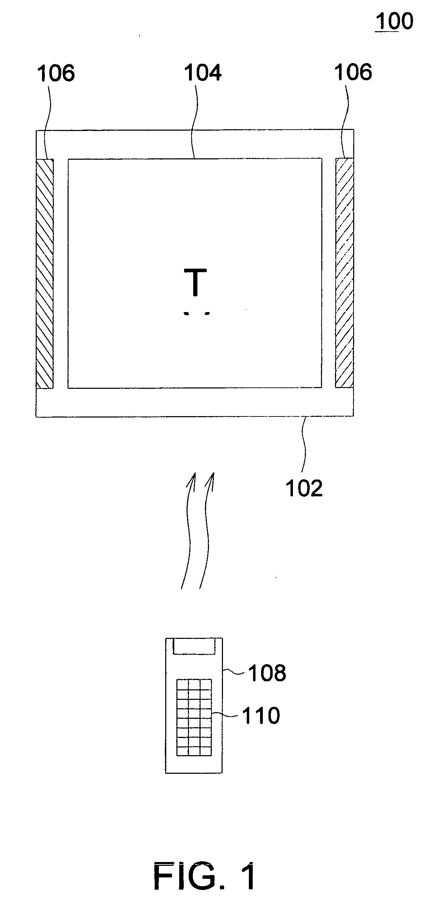

FIG. 1 is a schematic illustration showing an example of a display system according to a preferred embodiment of the invention. Referring to FIG. 1, the display system 100 includes a displaying device 102 and a wireless remote controller 108. The displaying device 102 includes a display monitor 104 and a speaker 106. The displaying device 102 displays an operation window and plays a video signal (TV programs). The displaying device 102 is preferably a television, such as a liquid crystal television, a plasma television, a flat screen television or a cathode ray tube (CRT) television. The type of the television is not particularly limited in this embodiment. The wireless remote controller 108 includes a button group 110 and a wireless transmission module such that the user can selectively open the operation window and perform the associated setting procedures.

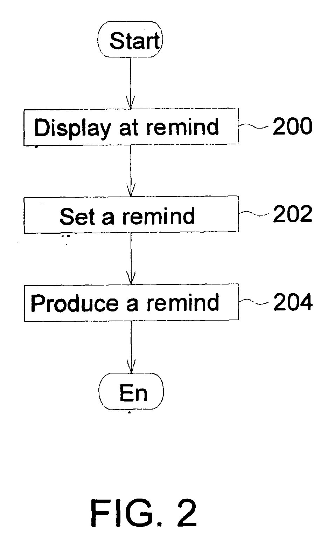

FIG. 2 is a flow chart showing a fixed time remind method according to the preferred embodiment of the invention. The fixed time remind method is used in the display system 100. First, in step 200, the displaying device 102 displays the operation window when the operation window is operated. The operation window includes a plurality of remind messages. Next, in step 202, a specific remind message is selected, and a remind time is set. The displaying device 102 saves the remind time and the specific remind message in the memory. Thereafter, in step 204, the displaying device 102 produces the remind message when the remind time is up. The remind message may include an audio message, a stationary icon, a remind text or an animated specific pattern

The detailed fixed time remind method will be described in the following. Referring to FIGS. 1 and 2, the user opens the operation window through the wireless remote controller 108 in step 200, such that the displaying device 102 displays the operation frame of the operation window. For example, the user may open the operation window through the corresponding function key in the button group 110. In this embodiment, the type of the button for opening the operation window is not particularly limited. When the operation window is opened, the operation window displays at least one remind message or preferably multiple remind messages. The remind messages respectively represent different remind meanings, such that the user can select one of the to-be-reminded events. For example, the remind messages include the message of reminding the user to take the trash out, the message of reminding the user to boil the water, the message of reminding the user to make a return call, the message of reminding the user to go out, and the like.

In step 202, when the operation window is opened, the user can select the to-be-enabled remind message and set and store the to-be-reminded time through using the suitable selection keys, such as direction keys or numeric keys in a channel selector, among the button group 110.

In step 204, when the remind time is up, the remind message to be produced by the displaying device 102 may be, for example, an audio message made by the speaker 106 or the stationary or animated remind image displayed on the display monitor 104 of the displaying device 102. The displaying device 102 may also display two or more than two types of remind messages simultaneously, for example, the audio message be made and the remind image be display on the display monitor 104.

When the remind time is up and after the displaying device 102 starts to produce the corresponding remind message, the user can cancel the remind setting by clicking any button among the button group 110 so as to stop producing the remind message. Otherwise, the remind message is kept for a specific time, such as one minute, and then the remind message may be produced every predetermined period of time until the remind message is disabled. Alternatively, the remind message is produced continuously and is kept until the remind message is cancelled.

The remind time may be an intermittent time, a prescribed time or a periodic time. When the remind time is the intermittent time, the displaying device 102 reminds the user once every predetermined period of fixed time, such as every hour. When the remind time is the prescribed time, the displaying device 102 reminds the user when the specific time prescribed by the user is up. When the remind time is the periodic time, the to-be-reminded event appears periodically. For example, the displaying device 102 produces the remind message at the specific time on every Monday.

For example, when the user is watching the television program, he or she can set the remind time corresponding to the remind message in order to avoid the miss of the predetermined time to go out. When the remind time is up, the television 102 produces the remind message. For example, the television 102 outputs a sound and an animated specific pattern to remind the user, who is watching the television, that the time to go out is up. Thus, the displaying device 102 of the invention can remind the user, who is paying too much attention on the television program, to remind the time to go out to deal with the important issues.

The display system and the fixed time remind method according to the embodiment of the invention can remind the user by various remind messages mentioned hereinabove, and the various to-be-reminded events may be represented by different remind signals. Compared to the prior art method using the memo, the invention is free from the problem of losing the remind message. Compared to the prior art method using the timer, the displaying device of the invention provides remind messages with different patterns such that the user can perform the setting, and effectively reminds the user of the to-be-finished event in a more convenient way.

While the invention has been described by way of example and in terms of a preferred embodiment, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A fixed time remind method used in a display system, which has a displaying device, the method comprising the steps of:
operating an operation window on the displaying device;
at least setting a remind message and a remind time corresponding to the remind message on the operation windows; and
producing the remind message when the remind time is up.

2. The method according to claim 1, wherein further comprises using a wireless remote controller for operating the operation window and setting the remind message and the remind time.

3. The method according to claim 1, wherein the remind message is an audio message.

4. The method according to claim 1, wherein the remind message is a stationary icon.

5. The method according to claim 1, wherein the remind message is an animated specific pattern.

6. The method according to claim1, wherein the remind message is produced every predetermined period of time until the remind message is disabled.

7. The method according to claim 1, wherein when the remind time is up, the remind message is produced continuously and is kept until the remind message is disabled.

8. The method according to claim 1, wherein the operation window displays a plurality of remind images on the displaying device when the operation window is opened, and the remind images have different patterns such that the user may perform settings according to a plurality of events.

9. The method according to claim 1, wherein the remind time is an intermittent time, a prescribed time, or a periodic time.

10. A display system, comprising:
a displaying device for displaying an operation window; and
a remote controller for operating the operation window and setting a remind message and a remind time corresponding to the remind message, wherein:
when the remind time is up, the displaying device produces the corresponding remind message.

11. The display system according to claim 10, wherein the remind message is an audio message.

12. The display system according to claim 10, wherein the remind message is a stationary icon.

13. The display system according to claim 10, wherein the remind message is an animated specific pattern.

14. The display system according to claim 10, wherein when the remind time is up, the remind message produced every predetermined period of time until the remind message is disabled.

15. The display system according to claim 10, wherein when the remind time is up, the remind message is continuously generated and kept until the remind message is disabled.

16. The display system according to claim 10, wherein the operation window displays a plurality of remind images on the displaying device when the operation window isoperated, and the remind images have different patterns such that the user may perform settings according to a plurality of events.

17. The display system according to claim 10, wherein the displaying device is a television.

18. The display system according to claim 10, wherein the remind time is an intermittent time, a prescribed time, or a periodic time.
